# EUROPEAN PATENT SPECIFICATION

(11) **EP 3 385 288 B1**
(45) Date of publication and mention of the grant of the patent: **04.06.2025**
(21) Application number: 16870165.4
(22) Date of filing: 07.11.2016
(51) Int. Cl.: C08F 4/52, C08F 136/06, C08F 136/08

(54) **POLYMERIZATION CATALYST COMPOSITION, AND METHOD FOR PRODUCING CONJUGATED DIENE POLYMER**
POLYMERISATIONSKATALYSATORZUSAMMENSETZUNG UND VERFAHREN ZUR HERSTELLUNG EINES KONJUGIERTEN DIENPOLYMERS
COMPOSITION DE CATALYSEUR DE POLYMÉRISATION, ET PROCÉDÉ DE PRODUCTION D'UN POLYMÈRE DE DIÈNE CONJUGUÉ

(30) Priority: 01.12.2015 JP 2015234969
(43) Date of publication of application: 10.10.2018
(73) Proprietor: Bridgestone Corporation, Tokyo 104-8340 (JP)
(72) Inventor: YAMAGATA, Yusuke, Tokyo 104-8340 (JP); YANAGISAWA, Aya, Tokyo 104-8340 (JP)
(74) Representative: Marks & Clerk LLP
(86) International application number: PCT/JP2016/004825
(87) International publication number: WO 2017/094222

(56) References cited:
- EP-A1- 3 184 555
- EP-A1- 3 363 837
- WO-A1-2013/179651
- WO-A1-2016/027402
- WO-A1-2016/027402
- JP-A- 2004 515 617
- JP-A- 2011 068 711
- JP-A- 2011 516 689
- JP-A- 2013 053 212
- JP-A- H0 394 833
- FRIEBE L ET AL: "Neodymium based Ziegler/Natta Catalysts and their Application in Diene Polymerization", ADVANCES IN POLYMER SCIENCE, SPRINGER, GERMANY, vol. 204, 5 July 2006 (2006-07-05), pages 1 - 154, XP002491130, ISSN: 0065-3195, [retrieved on 20060705], DOI: 10.1007/12_094

## Description

### TECHNICAL FIELD

This disclosure relates to a polymerization catalyst composition and a method for producing a conjugated diene-based polymer.

### BACKGROUND

Generally, durability such as high breaking resistance, wear resistance, crack growth resistance and the like is important to a rubber product such as tire and the like, and in order to apply such performance to the rubber product, use of a rubber component having excellent elasticity is essential. Natural rubber is known as such rubber component. However, since price of natural rubber is rising, development of a synthetic rubber which can replace natural rubber and has equivalent properties as natural rubber is required currently.

Examples of such synthetic rubber include a conjugated diene polymer obtained by polymerizing a conjugated diene as a monomer, such as polybutadiene, polyisoprene and the like. In such conjugated diene polymer, it is regarded that a higher cis-1,4 bond content in units derived from conjugated diene contributes more to improvement of the durability of the rubber product (actually, natural rubber has approximately a cis-1,4 bond content of 100%). Then, regarding a polymer having a higher cis-1,4 bond content and a catalyst used in preparation thereof, various study and development has been performed.

For example, WO2011/016210A1 (PTL1) reports that by polymerizing a conjugated diene compound a non-conjugated olefin other than the conjugated diene compound under the existence of a polymerization catalyst composition containing a specific metallocene complex, a cis-1,4 bond content in a conjugated diene compound moiety of an obtained copolymer can be raised. Note that PTL1 discloses as well that the metallocene complex is obtained by reacting a plurality of specific compounds in a solvent for several hours to tens of hours. Reference is also made to JP 2013-053212 and JP 2011-068711.

### CITATION LIST

### Patent Literature

PTL1: WO2011/016210A1

### SUMMARY

### (Technical Problem)

However, as a result of study, we discovered that from the viewpoint of the effect of raising the cis-1,4 bond content of the polymer in the case of being used in synthesis of polyisoprene from isoprene, there is still room for improving the aforementioned conventional polymerization catalyst composition.

Moreover, in the rubber industry, except for polyisoprene, development of a catalyst capable of further raising a cis-1,4 bond content of a conjugated diene polymer or a 1,4 bond content of a conjugated diene-based copolymer (copolymer) has been commonly required.

It thus would be helpful to provide a polymerization catalyst composition capable of producing a conjugated diene polymer having a high cis-1,4 bond content or a conjugated diene-based copolymer having a high 1,4 bond content.

Moreover, it would be helpful to provide a method for producing a conjugated diene-based polymer capable of raising a cis-1,4 bond content of a conjugated diene polymer or a 1,4 bond content of a conjugated diene-based copolymer.

### (Solution to Problem)

We thus provide the following.

The polymerization catalyst composition of this disclosure comprises: a Component (A) being a rare earth element compound represented by the following general formula (a-1):

M-(AQ¹)(AQ²)(AQ³) ... (a-1)

where M is selected from lanthanoid elements; AQ¹, AQ² and AQ³ are the same or different functional groups; A is nitrogen, oxygen or sulfur; and the Component (A) has at least one M-A bond;
a Component (B) being an ionic compound;
a Component (C) being a compound containing a cyclopentadiene skeleton selected from substituted or unsubstituted cyclopentadienes, substituted or unsubstituted indenes, or substituted or unsubstituted fluorenes, and a Component (D) being a halogen compound, wherein
when the Component (C) is a compound containing a cyclopentadiene skeleton selected from substituted or unsubstituted indenes, the Component (C) is selected from 2-phenyl-1H-indene, 3-benzyl-1H-indene, 3-methyl-2-phenyl-1H-indene, 3-benzyl-2-phenyl-1H-indene, 1-benzyl-1H-indene, 1-methyl-3-dimethylbenzylsilyl-indene, and 1,3-(t-BuMe₂Si)₂-indene.

The method for producing a conjugated diene-based polymer of this disclosure uses the polymerization catalyst composition.

Here, the term "conjugated diene polymer" in the present Specification refers to a homopolymer obtained by using only one conjugated diene compound as a monomer, or a copolymer obtained by using only two or more conjugated diene compounds as monomers; and the term "conjugated diene-based copolymer" refers to a copolymer obtained by using a conjugated diene compound and one or more other compounds as monomers. Moreover, the term "conjugated diene-based polymer" is general term for the aforementioned "conjugated diene polymer" and "conjugated diene-based copolymer".

### (Advantageous Effect)

According to this disclosure, it is possible to provide a polymerization catalyst composition capable of producing a conjugated diene polymer having a high cis-1,4 bond content or a conjugated diene-based copolymer having a high 1,4 bond content.

Moreover, according to this disclosure, it is possible to provide a method for producing a conjugated diene-based polymer capable of raising a cis-1,4 bond content of a conjugated diene polymer or a 1,4 bond content of a conjugated diene-based copolymer.

### DETAILED DESCRIPTION

The following describes an embodiment of the polymerization catalyst composition and the method for producing a conjugated diene-based polymer of this disclosure in detail.

### (Polymerization catalyst composition)

This polymerization catalyst composition of an example of this disclosure necessarily contains:
- a Component (A) being a rare earth element compound represented by the following general formula (a-1) (hereinafter referred to simply as "the rare earth element compound" as well);
- a Component (B) being an ionic compound; and
- a Component (C) being a compound containing a cyclopentadiene skeleton selected from substituted or unsubstituted cyclopentadienes, substituted or unsubstituted indenes, or substituted or unsubstituted fluorenes (hereinafter referred to simply as "the cyclopentadiene skeleton-containing compound" as well),
   and a Component (D) being a halogen compound; and may contain as well
- a Component (E) being an organometallic compound.

As described above, a conventional polymerization catalyst composition contains a metallocene complex, and from the viewpoint of the effect of raising the cis-1,4 bond content of the polymer in the case of being used in synthesis of polyisoprene from isoprene, there is still room for improving the conventional polymerization catalyst composition. Then, as a result of intensive study, we discovered that by using a polymerization catalyst composition containing: a specified rare earth element compound which is not a metallocene complex; a cyclopentadiene skeleton-containing compound capable of functioning as a conjugated ligand in a reaction system; and an ionic compound capable of functioning as a non-coordinating anion, an effect can be achieved such that a cis-1,4 bond content of polyisoprene synthesized from isoprene is raised, and a cis-1,4 bond content of a conjugated diene polymer or a 1,4 bond content of a conjugated diene-based copolymer other than polyisoprene is further raised as well. Note that although the reason of achievement of this effect is still uncertain, it is believed as an effect of improvement of stereo controllability due to addition of the specific ligand.

Moreover, the aforementioned polymerization catalyst composition do not need the metallocene complex contained in the conventional polymerization catalyst composition, and thus has the advantage such that it can be easily prepared without a step preparing the metallocene complex.

The following describes components compoundable to the polymerization catalyst composition of an example of this disclosure in detail.

### -Rare earth element compound represented by general formula (a-1) (Component (A))-

The Component (A) is a rare earth element compound represented by the following general formula (a-1):

M-(AQ¹)(AQ²)(AQ³) ... (a-1)

where M is selected from lanthanoid elements; AQ¹, AQ² and AQ³ are the same or different functional groups; A is nitrogen, oxygen or sulfur, and the Component (A) has at least one M-A bond. Specific examples of the lanthanoid element include lanthanum, cerium, praseodymium, neodymium, promethium, samarium, europium, gadolinium, terbium, dysprosium, holmium, erbium, thulium, ytterbium, and lutetium. The Component (A) has at least one M-A bond. Moreover, the Component (A) is a component capable of enhancing the catalytic activity in the reaction system, and capable of reducing the reaction time and raising the reaction temperature.

Note that the Component (A) may be used alone or in a combination of two or more.

From the viewpoint of improving the catalytic activity and the reaction controllability, the M is preferably gadolinium.

In the case where A is nitrogen, the functional groups represented by AQ¹, AQ² and AQ³ (i.e., NQ¹, NQ² and NQ³) may be amide group, etc. Examples of the amide groups include: aliphatic amide groups such as dimethyl amide group, diethyl amide group and diisopropyl amide group; aryl amide groups such as phenyl amide group, 2,6-di-tert-butylphenyl amide group, 2,6-diisopropylphenyl amide group, 2,6-dineobentylphenyl amide group, 2-tert-butyl-6-isopropylphenyl amide group, 2-tert-butyl-6-neobentylphenyl amide group, 2-isopropyl-6-neobentylphenyl amide group and 2,4,6-tert-butylphenyl amide group; and bistrialkylsilyl amide groups such as bistrimethylsilyl amide group. In particular, from the viewpoint of the solubility to an aliphatic hydrocarbon, bistrimethylsilyl amide group is preferable.

Such functional groups may be used alone or in a combination of two or more.

In the case where A is oxygen, the rare earth element compound represented by general formula (a-1) (i.e., M-(OQ¹)(OQ²)(OQ³)) is not limited, and may be the following compound (I) or (II):
a rare earth alcoholate represented by:

   (RO)₃M (I),
or a rare earth carboxylate represented by:

   (R-CO₂)₃M (II),
etc. Here, in each aforementioned compound (I) or (II), Rs are the same or different alkyl groups having 1 to 10 carbon atoms.

Note that since the Component (A) preferably does not have bonds of rare earth element and carbon, the aforementioned compound (I) or compound (II) is preferably used.

In the case where A is sulfur, the rare earth element compound represented by general formula (a-1) (i.e. M-(SQ¹)(SQ²)(SQ³)) is not limited, and may be the following compound (V) or (VI):
a rare eath alkylthiolate represented by:

   (RS)₃M (V),
or a compound represented by:

   (R-CS₂)₃M (VI),
etc. Here, in each aforementioned compound (V) or (VI), Rs are the same or different alkyl groups having 1 to 10 carbon atoms.

Further, since the Component (A) preferably does not have bonds of rare earth element and carbon, the aforementioned compound (V) or compound (VI) is preferably used.

### -Ionic compound (Component (B))-

The Component (B) is an ionic compound constituted of a non-coordinating anion and a cation. Specific examples of the ionic compound (B-1) include an ionic compound capable of being reacted with the Component (A), to generate a cationic transition metal compound.

Examples of the non-coordinating anion include tetravalent boron anion, such as tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl) borate, tetra(xylyl)borate, triphenyl(pentafluorophenyl)borate, [tris(pentafluorophenyl)phenyl]borate, tridecahydride-7,8-dicarbaundecaborate, and the like. A preferable example is tetrakis(pentafluorophenyl)borate. Examples of the cation include carbonium cation, oxonium cation, ammonium cation, phosphonium cation, cycloheptatrienyl cation, ferrocenium cation having transition metal, and the like. Specific examples of carbonium ion include trisubstituted carbonium cation such as triphenylcarbonium cation, tri(substituted phenyl)carbonium cation, and the like. Specific examples of the tri(substituted phenyl)carbonyl cation include tri(methylphenyl)carbonium cation, tri(dimethylphenyl)carbonium cation, and the like. Specific examples of the ammonium cation include: trialkylammonium cation such as trimethylammonium cation, triethylammonium cation, tripropylammonium cation, tributylammonium cation (e.g., tri(n-butyl)ammonium cation); N,N-dialkylanilinium cation such as N,N-dimethylanilinium cation, N,N-diethylanilinium cation, N,N-2,4,6-pentamethylanilinium cation, and the like; and dialkylammonium cation such as diisopropylammonium cation, dicyclohexylammonium cation, and the like. Specific examples of phosphonium cation include triarylphosphonium cation such as triphenylphosphonium cation, tri(methylphenyl)phosphonium cation, tri(dimethylphenyl)phosphonium cation, and the like. A compound as a combination of a non-coordinating anion and a cation selected from the aforementioned examples, respectively, is preferably used as the ionic compound. Specific examples of the ionic compound include N,N-dimethylanilinium tetrakis(pentafluorophenyl)borate, triphenylcarbonium tetrakis(pentafluorophenyl)borate, and the like.

These ionic compounds may be used alone or in a combination of two or more.

### -Cyclopentadiene skeleton-containing compound (Component (C))-

The Component (C) is a compound selected from substituted or unsubstituted cyclopentadienes, substituted or unsubstituted indenes, or substituted or unsubstituted fluorenes.

Note that the Component (C) may be used alone or in a combination of two or more.

In particular, it is preferable that the cyclopentadiene skeleton-containing compound is substituted cyclopentadiene, substituted indene or substituted fluorene. Thereby, a bulk as a polymerization catalyst is advantageously increased, which shortens the reaction time and raises the reaction temperature.

Examples of the substituted cyclopentadiene include pentamethylcyclopentadiene, tetramethylcyclopentadiene, isopropylcyclopentadiene, trimethylsilyl-tetramethylcyclopentadiene, and the like.

The substituted or unsubstituted indene is selected from 2-phenyl-1H-indene, 3-benzyl-1H-indene, 3-methyl-2-phenyl-1H-indene, 3-benzyl-2-phenyl-1H-indene, 1-benzyl-1H-indene, 1-methyl-3-dimethylbenzylsilyl-indene, and 1,3-(t-BuMe₂Si)₂-indene. In particular, from the viewpoint of reducing the molecular weight distribution, 3-benzyl-1H-indene and 1-benzyl-1H-indene are preferable.

Examples of the substituted fluorene include trimethylsilyl fluorine, isopropyl fluorine, and the like.

### -Halogen compound (Component (D))-

The Component (D) is at least one compound selected from the group consisting of: a halogen-containing compound being a Lewis acid (hereinafter referred to as "Component (D-1)" as well), a complex compound of metal halides and a Lewis base (hereinafter referred to as "Component (D-2)" as well), and an organic compound containing an active halogen (hereinafter referred to as "Component (D-3)" as well).

These compounds react with the Component (A), i.e., a rare earth element-containing compound having M-N bond, thereby generating a cationic transition metal compound, a halogenated transition metal compound, and/or a transition metal compound in a state where a transition metal center has insufficient electrons.

Since the polymerization catalyst composition of this disclosure further contains the Component (D), it is possible to particularly further raise a cis-1,4 bond content of a conjugated diene polymer such as polybutadiene, polyisoprene and the like.

Examples of the Component (D-1) include a halogen-containing compound containing an element of Group 3, Group 4, Group 5, Group 6, Group 8, Group 13, Group 14 or Group 15 in the periodic table. In particular, an aluminum halide or an organometallic halide is preferable.

Examples of the halogen-containing compound being a Lewis acid, include titanium tetrachloride, tungsten hexachloride, tri(pentafluorophenyl) borate, methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, aluminum tribromide, tri(pentafluorophenyl aluminum, dibutyltin dichloride, tin tetrachloride, phosphorus trichloride, phosphorus pentachloride, antimony trichloride and antimony pentachloride. In particular, ethyl aluminum dichloride, ethyl aluminum dibromide, diethyl aluminum chloride, diethyl aluminum bromide, ethyl aluminum sesquichloride and ethyl aluminum sesquibromide are preferable.

As the halogen, chlorine or bromine is preferable.

The halogen containing compound being a Lewis acid (Component (D-1)), may be used alone or in a combination of two or more.

Examples of the metal halide used in the Component (D-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, gold bromide, etc. In particular, magnesium chloride, calcium chloride, barium chloride, zinc chloride, manganese chloride and copper chloride are preferable, and magnesium chloride, zinc chloride, manganese chloride and copper chloride are more preferable.

The Lewis base used in the Component (D-2) is preferably a phosphorus compound, a carbonyl compound, a nitrogen compound, an ether compound, or an alcohol.

For example, tributyl phosphate, tri-2-ethylhexyl phosphate, triphenyl phosphate, tricresyl phosphate, triethylphosphine, tributylphosphine, triphenylphosphine, diethylphosphino ethane, diphenylphosphino ethane, acetylacetone, benzoylacetone, propionitrileacetone, valerylacetone, ethyl acetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, lauryl alcohol and the like may be mentioned. In particular, tri-2-ethylhexyl phosphate, tricresyl phosphate, acetylacetone, 2-ethylhexane acid, versatic acid, 2-ethylhexyl alcohol, 1-decanol, and lauryl alcohol are preferable.

The Lewis base mentioned above is brought to reaction at a ratio of 0.01 mol to 30 mol, preferably 0.5 mol to 10 mol per mol of the metal halide mentioned above. A reaction product with the Lewis base at this ratio allows a reduction in metal remaining in the polymer.

The complex compounds of a metal halide and a Lewis acid (Component (D-2)) may be used alone or in a combination of two or more.

Examples of the Component (D-3) include benzyl chloride and the like.

The organic compound containing an active halogen (Component (D-3)) may be used alone or in a combination of two or more.

### -Organometallic compound (Component (E))-

Examples of the Component (E) being an organometallic compound, include an organometallic compound represented by general formula (e-1):

YR¹ₐR²₃R³_{c} ... (e-1)

where Y is a metallic element selected from the group consisting of Group 1, Group 2, Group 12 and Group 13 elements in the periodic table; R¹ and R² are hydrocarbon group having 1 to 10 carbon atoms or hydrogen atom, and R³ is a hydrocarbon group having 1 to 10 carbon atoms, where R¹, R² and R³ may be the same or different from each other; and in the case that Y is a metallic element of Group 1, a = 1 and b, c = 0; in the case that Y is a metallic element of Group 2 or Group 12, a, b = 1 and c = 0; and in the case that Y is a metallic element of Group 13, a, b, c = 1.

Since the polymerization catalyst composition of an example of this disclosure further contains the Component (E), it is possible to enhance the polymerization activity.

Here, from the viewpoint of enhancing the catalytic activity, it is preferable that in formula (e-1), at least one of R¹, R² and R³ is different.

Specifically, it is preferable that the Component (E) is an organic aluminum compound represented by general formula (e-2):

AlR⁴ₐR⁵_{b}R⁶_{c} ... (e-2)

(in the formula, R⁴ and R⁵ are hydrocarbon group having 1 to 10 carbon atoms or hydrogen atom; R⁶ is a hydrocarbon group having 1 to 10 carbon atoms; and R⁴, R⁵ and R⁶ may be either the same or different).

As the organic aluminum compound in general formula (X), trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, trioctyl aluminum; diethylaluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, diisooctyl aluminum hydride; ethyl aluminum dihydride, n-propyl aluminum dihydride, isobutyl aluminum dihydride may be used, among which triethyl aluminum, triisobutyl aluminum, diethylaluminum hydride, diisobutyl aluminum hydride are preferable.

The organic aluminum compounds may be used alone or in a combination of two or more.

The followings describes a compounding ratio of each component of the polymerization catalyst composition of an example.

From the viewpoint of obtaining the catalytic activity sufficiently, it is preferable that a molar ratio of a compounding amount of the Component (B) being an ionic compound, to a compounding amount of the Component (A) being a rare earth element compound, is 0.1 or more. Moreover, from the viewpoint of suppressing deterioration of the catalytic activity, 10 or less is preferable, specifically, approximately 1 is preferable.

From the viewpoint of obtaining the catalytic activity sufficiently, a molar ratio of a compounding amount of the Component (C) being a cyclopentadiene skeleton-containing compound, to the compounding amount of the Component (A), is preferably more than 0, more preferably 0.5 or more, particularly preferably 1 or more. Moreover, from the viewpoint of suppressing deterioration of the catalytic activity, 3 or less is preferable, 2.5 or less is more preferable, and 2.2 or less is particularly preferable.

From the viewpoint of enhancing the catalytic activity, a molar ratio of a compounding amount of the Component (D) being a halogen compound, to the compounding amount of the Component (A), is preferably 0 or more, more preferably 0.5 or more, particularly preferably 1.0 or more. Moreover, from the viewpoint of maintaining a solubility of the Component (E) and suppressing deterioration of the catalytic activity, 20 or less is preferable, and 10 or less is more preferable.

Therefore, according to the aforementioned range, it is possible to enhancing the effect of raising the of cis-1,4 bond content a conjugated diene polymer or the 1,4 bond content of a conjugated diene-based copolymer.

From the viewpoint of enhancing the catalytic activity, a molar ratio of a compounding amount of the Component (E) being an organometallic compound, to the compounding amount of the Component (A), is preferably 1 or more, more preferably 5 or more. Moreover, the viewpoint of suppressing deterioration of the catalytic activity, 50 or less is preferable, 30 or less is more preferable, and specifically, approximately 10 is preferable.

### (Method for producing conjugated diene polymer)

### (Method for producing conjugated diene polymer according to Embodiment 1)

The method for producing a conjugated diene-based polymer of an example of this disclosure necessarily uses the polymerization catalyst composition of an example of this disclosure. The method for producing a conjugated diene-based polymer according to Embodiment 1 of this disclosure (hereinafter referred to simply as "the method according to Embodiment 1") is a method for producing a conjugated diene polymer, comprising:
monomer preparation, preparing a conjugated diene monomer;
catalyst composition preparation, preparing a polymerization catalyst composition containing: a Component (A) being a rare earth element compound; a Component (B) being an ionic compound; a Component (C) being a cyclopentadiene skeleton-containing compound; a Component (D) being a halogen compound; and optionally a Component (E) being an organometallic compound; and
polymerization reaction, blending the conjugated diene monomer and the polymerization catalyst composition, and performing polymerization reaction of the conjugated diene monomer.

Such conjugated diene monomer may be used alone or in a combination of two or more.

According to this method, it is possible to perform polymerization reaction of conjugated diene at a high catalytic activity. Moreover, according to this method, the cis-1,4 bond content can be raised at a high degree, and thus it is possible to provide a conjugated diene polymer rich in elasticity, which can be preferably used as a rubber component when manufacturing a rubber product.

### -Conjugated diene monomer-

Examples of the conjugated diene monomer used in the method according to Embodiment 1 include 1,3-butadiene, isoprene, 1,3-pentadiene, 2,3-dimethyl-1,3-butadiene, and 1,3-hexadiene. In particular, from the viewpoint of improving various performances of the rubber composition and the rubber product such as tire and the like, either or both of 1,3-butadiene and isoprene is preferable. These may be used alone or in combination of two or more types. In particular, in the case of using 1,3-butadiene and isoprene as the conjugated diene monomer, from the viewpoint of enhancing the catalytic activity in the reaction system and reducing the molecular weight distribution, a ratio of isoprene to 1,3-butadiene is preferably 1 or more, more preferably 3 or more, particularly preferably 7 or more.

### -Conditions, etc.-

Reagents used in each aforementioned process may be used without a solvent or together with an appropriate solvent with respect to each reagent.

In each aforementioned process, it is preferable that each reagent and solvent is appropriately subjected to purification operation such as distillation, degassing, lyophilization and the like.

Moreover, it is preferable that each aforementioned process, particularly the catalyst composition preparation and the polymerization reaction, are performed under an inactive gas atmosphere, such as nitrogen gas, argon gas and the like.

Here, from the viewpoint of obtaining the catalytic activity sufficiently, a molar quantity of the Component (A) per 100 g of the conjugated diene monomer is preferably 0.01 mmol or more, more preferably 0.03 mmol or more. Moreover, from the viewpoint of avoiding excessive catalyst system, 0.5 mmol or less is preferable, 0.05 mmol or less is more preferable.

The solvent may be any one inactive in the polymerization reaction without being specifically limited. Examples thereof include n-hexane, cyclohexane, toluene or mixtures thereof. Among these, from the viewpoint of dissolving the ionic compound (Component (B)), toluene is preferable. Note that the solvent may be directly used in preparation of the polymerization catalyst composition of an example of this disclosure.

The polymerization reaction may be performed with a method well-known in the art, such as solution polymerization, suspension polymerization, liquid phase bulk polymerization, emulsion polymerization, vapor phase polymerization, solid phase polymerization, and the like. The reaction temperature is not specifically limited, and may be -100°C to 300°C, preferably 0°C to 200°C, more preferably 25°C to 120°C. At a high temperature, there is a risk of deterioration of cis-1,4-selectivity, and at a low temperature, there is a risk of low reaction rate.

The reaction pressure is not specifically limited, and may be, e.g., ordinary pressure. Note that at a high pressure, there is a risk that the conjugated diene monomer cannot be sufficiently incorporated into the polymerization reaction, and at a low pressure, there is a risk of low reaction rate.

The reaction time is not specifically limited, and may be, e.g., 0.5 hours to 3 hours.

### (Method for producing conjugated diene polymer according to Embodiment 2)

The method for producing a conjugated diene-based polymer according to Embodiment 2 of this disclosure (hereinafter referred to simply as "the method according to Embodiment 2") is a method polymerizing at least a conjugated diene compound and a non-conjugated olefin compound and/or an aromatic vinyl compound, so as to obtain a multi-component copolymer. Specifically, the method according to Embodiment 2 comprises:
monomer preparation, preparing as monomers at least: a conjugated diene monomer being a conjugated diene compound; and a non-conjugated olefin monomer being a non-conjugated olefin compound, and/or an aromatic vinyl monomer being an aromatic vinyl compound;
catalyst composition preparation, preparing a polymerization catalyst composition containing: a Component (A) being a rare earth element compound; a Component (B) being an ionic compound; a Component (C) being a cyclopentadiene skeleton-containing compound; a Component (D) being a halogen compound; and optionally a Component (E) being an organometallic compound; and
polymerization reaction, blending the monomers and the polymerization catalyst composition, and performing polymerization reaction of the monomers.

Note that the conjugated diene compound, the non-conjugated olefin compound, and the aromatic vinyl compound may be used alone or in a combination of two or more.

According to this method, polymerization reaction can be performed at a high catalytic activity, and thus more non-conjugated olefin compound and/or aromatic vinyl compound can be easily introduced with respect to the conjugated diene compound, so as to obtain the multi-component copolymer. This multi-component copolymer can be preferably used as a rubber component when manufacturing a rubber product such as tire and the like.

Note that in the present Specification, the term "multi-component copolymer" refers to a copolymer obtained by polymerizing monomers of three types or more.

### -Conjugated diene monomer-

Examples of the conjugated diene monomer used in the method according to Embodiment 2 include 1,3-butadiene, isoprene, 1,3-pentadiene, 2,3-dimethyl-1,3-butadiene, and 1,3-hexadiene. In particular, from the viewpoint of improving various performances of the rubber composition and the rubber product such as tire and the like, either or both of 1,3-butadiene and isoprene is preferable.

### -Non-conjugated olefin monomer-

Examples of the non-conjugated olefin monomer used in the method according to Embodiment 2 include: α-olefins such as ethylene, propylene, 1-butene, 1-pentene, 1-hexene, 1-heptene and 1-octene; and hetero atom substituted alkene compounds such as vinyl pivalate, 1-phenylthioethene and N-vinylpyrrolidone.

### -Aromatic vinyl monomer-

Examples of the aromatic vinyl monomer used in the method according to Embodiment 2 include styrene, o-methylstyrene, m-methylstyrene, p-methylstyrene, o,p-dimethylstyrene, o-ethylstyrene, m-ethylstyrene and p-ethylstyrene.

Note that in the method according to Embodiment 2, an amount of the aromatic vinyl monomer in a total amount of the used conjugated diene monomer, non-conjugated olefin monomer and aromatic vinyl monomer is preferably 5% or less, more preferably 2% or less, even more preferably 0%.

### -Conditions, etc.-

The conditions, etc. of the method according to Embodiment 2 is the same as the conditions, etc. of the method for producing a conjugated diene-based polymer according to Embodiment 1, except for the following exception.

It is preferable that the polymerization catalyst composition used in the method according to Embodiment 2 contains two or more of the Component (E) being an organometallic compound described above. In particular, it is preferable that the polymerization catalyst composition contains: a First Component (E), where in the general formula (e-1) described above, each of R¹ and R² is a hydrocarbon having 1 to 10 carbon atoms; and a Second Component (E), where in the general formula (e-1) described above, at least one of R¹ and R² is a hydrogen atom. Thereby, it is possible to enhance the polymerization activity and to suppress the amount of the Component (A).

### EXAMPLES

The present disclosure is described in more detail below with reference to Examples, by which the present disclosure is not intended to be limited in any way.

### <Production of polymer>

A polymer was produced as following.

### (Example 1 (not according to the invention))

110 g of a toluene solution containing 30 g (0.44 mol) of isoprene was added to a 1L glass reactor that had been sufficiently dried.

Meanwhile, in a glovebox under a nitrogen atmosphere, 23.4 µmol of trisbistrimethylsilylamide gadolinium [Gd(N(SiMe₃)₂)₃] (Component (A)), 46.8 µmol of 2-phenyl-1H-indene (Component (C)), and 0.23 mmol of diisobutyl aluminum hydride (Component (E)) were charged in a glass container, and dissolved with 20 mL of toluene. Next, 23.4 µmol of N,N-dimethylanilinium tetrakis(pentafluorophenyl)borate [Me₂NHPhB(C₆F₅)₄] (Component (B)) was added, so as to obtain a polymerization catalyst composition.

Then, the polymerization catalyst composition was removed from the glove box, and an amount of 18.0 µmol of the polymerization catalyst composition in terms of gadolinium was added into the glass reactor containing isoprene. The reaction system was maintained at 50°C for 120 minutes to perform polymerization reaction of isoprene.

Next, 2 mL of an isopropanol solution containing 5 mass% of 2,2'-methylene-bis(4-ethyl-6-t-butylphenol) (NS-5) was added, so as to terminate the polymerization reaction. Further, a reaction product was separated by adding a large amount of methanol into the glass reactor, and vacuum drying at 60°C, so as to obtain a Polymer A (yield: 27 g).

### (Example 2 (not according to the invention))

A Polymer B was obtained (yield: 27 g) similarly as Example 1, except that 3-methyl-2-phenyl-1H-indene (Component (C)) was used instead of 2-phenyl-1H-indene (Component (C)) in Example 1.

### (Example 3)

110 g of a hexane solution containing 30 g (0.44 mol) of isoprene was added to a 1L glass reactor that had been sufficiently dried.

Meanwhile, in a glovebox under a nitrogen atmosphere, 23.4 µmol of trisbistrimethylsilylamide gadolinium [Gd(N(SiMe₃)₂)₃] (Component (A)), 46.8 µmol of 2-phenyl-1H-indene (Component (C)), and 0.23 mmol of diisobutyl aluminum hydride (Component (E)) were charged in a glass container, and dissolved with 20 mL of toluene. Next, 23.4 µmol of N,N-dimethylanilinium tetrakis(pentafluorophenyl)borate [Me₂NHPhB(C₆F₅)₄] (Component (B)) and 11.7 µmol of diethyl aluminum chloride (Component (D)) were added, so as to obtain a polymerization catalyst composition.

Then, the polymerization catalyst composition was removed from the glove box, and an amount of 18.0 µmol of the polymerization catalyst composition in terms of gadolinium was added into the glass reactor containing isoprene. The reaction system was maintained at 50°C for 120 minutes to perform polymerization reaction of isoprene.

Next, 2 mL of an isopropanol solution containing 5 mass% of 2,2'-methylene-bis(4-ethyl-6-t-butylphenol) (NS-5) was added, so as to terminate the polymerization reaction. Further, a reaction product was separated by adding a large amount of methanol into the glass reactor, and vacuum drying at 60°C, so as to obtain a Polymer C (yield: 26 g).

### (Example 4)

A Polymer D was obtained (yield: 23 g) similarly as Example 3, except that 3-methyl-2-phenyl-1H-indene (Component (C)) was used instead of 2-phenyl-1H-indene (Component (C)) in Example 3.

### (Example 5)

A Polymer E was obtained (yield: 21 g) similarly as Example 4, except that the addition amount of diethyl aluminum chloride (Component (D)) in Example 4 was changed from 11.7 µmol to 23.4 µmol.

### (Example 6)

A Polymer F was obtained (yield: 20 g) similarly as Example 4, except that the addition amount of diethyl aluminum chloride (Component (D)) was changed from 11.7 µmol to 46.8 µmol in Example 4.

### (Comparative Example 1)

A Polymer G was obtained (yield: 27 g) similarly as Example 1, except that 2-phenyl-1H-indene (Component (C)) in Example 1 was not added.

### (Comparative Example 2)

A Polymer H was obtained (yield: 25 g) similarly as Example 1, except that bis(2-phenylindenyl)gadolinium bis(dimethylsilylamide) [(2-PhC₉H₆)₂GdN(SiHMe₂)₂] (Component (C)) was used instead of trisbistrimethylsilylamide gadolinium [Gd(N(SiMe₃)₂)₃] (Component (A)) and 2-phenyl-1H-indene (Component (C)) in Example 1.

### (Comparative Example 3)

A Polymer I was obtained (yield: 27 g) similarly as Comparative Example 2, except that 5.85 µmol of diethyl aluminum chloride (Component (D)) was added simultaneously with the addition of N,N-dimethylanilinium tetrakis(pentafluorophenyl)borate [Me₂NHPhB(C₆F₅)₄] (Component (B)) in Comparative Example 2.

### (Comparative Example 4)

A Polymer J was obtained (yield: 25 g) similarly as Comparative Example 3, except that the addition amount of diethyl aluminum chloride (Component (D)) in Comparative Example 3 was changed from 5.85 µmol to 11.7 µmol.

### (Comparative Example 5)

Polymerization reaction was performed similarly as Comparative Example 3, except that the addition amount of diethyl aluminum chloride (Component (D)) in Comparative Example 3 was changed from 5.85 µmol to 23.4 µmol. However, due to loss of polymerization activity, no polymer was obtained.

### (Example 7)

A Polymer K was obtained (yield: 20 g) similarly as Example 4, except that tetramethylcyclopentadiene (Component (C)) was used instead of 3-methyl-2-phenyl-1H-indene (Component (C)) in Example 4.

### (Example 8)

A Polymer L was obtained (yield: 19 g) similarly as Example 4, except that trimethylsilyl fluorene (Component (C)) was used instead of 3-methyl-2-phenyl-1H-indene (Component (C)) in Example 4.

### (Example 9)

A Polymer M was obtained (yield: 25 g) similarly as Example 4, except that 1,3-butadiene was used instead of isoprene in Example 4.

### (Example 10)

A Polymer N was obtained (yield: 25 g) similarly as Example 4, except that a rare earth alcoholate (tris-(tert-butoxide)gadolinium) (Component (A)) represented by (RO)₃M [where M is gadolinium, and R is tert-butyl group] was used instead of trisbistrimethylsilylamide gadolinium [Gd(N(SiMe₃)₂)₃] (Component (A)) in Example 4.

### (Example 11)

A Polymer O was obtained (yield: 25 g) similarly as Example 4, except that a rare earth alkylthiolate (tris-(tert-butylthio)gadolinium) (Component (A)) represented by (RS)₃M [where M is gadolinium, and R is tert-butyl group] was used instead of trisbistrimethylsilylamide gadolinium [Gd(N(SiMe₃)₂)₃] (Component (A)) in Example 4.

### (Example 12 (not according to the Invention))

780 g of a cyclohexane solution containing 1.5 g (0.014 mol) of styrene was added as an aromatic vinyl compound to a 2L stainless steel reactor that had been sufficiently dried.

Meanwhile, in a glovebox under a nitrogen atmosphere, 53.5 µmol of [Gd(N(SiMe₃)₂)₃] (Component (A)), 53.5 µmol of 1,3-(t-BuMe₂Si)₂-indene (Component (C)), 53.5 µmol of trityltetrakis(pentafluorophenyl)borate [C(C₆H₅)₃][B(C₆F₅)₄] (Component (B)), 0.32 mmol of triethyl aluminum (Component (E)) and 1.07 mmol of diisobutyl aluminum hydride (Component (E)) were charged in a glass container, and dissolved with 35 mL of toluene, so as to obtain a polymerization catalyst composition (catalyst solution).

Then, the polymerization catalyst composition was removed from the glove box, and a total amount of the polymerization catalyst composition was added into the stainless steel reactor containing styrene. Next, 550 g of a monomer solution containing 135 g (2.5 mol) of 1,3-butadiene was introduced as a conjugated diene compound, so as to perform polymerization reaction under a pressure of ethylene as a non-conjugated olefin compound (1.5 MPa) at 70°C for 120 minutes.

Next, 1 mL of an isopropanol solution containing 5 mass% of 2,2'-methylene-bis(4-ethyl-6-t-butylphenol) (NS-5) was added, so as to terminate the polymerization reaction. Further, a reaction product was separated by adding a large amount of 2-propanol into the stainless steel reactor, and vacuum drying at 60°C, so as to obtain a Copolymer P (yield: 154 g).

### (Example 13 (not according to the Invention))

880 g of a toluene solution containing 220 g (2.12 mol) of styrene was added as an aromatic vinyl compound to a 2L stainless steel reactor that had been sufficiently dried.

Meanwhile, in a glovebox under a nitrogen atmosphere, 250 µmol of [Gd(N(SiMe₃)₂)₃] (Component (A)), 250 µmol of 1,3-(t-BuMe₂Si)₂-indene (Component (C)), 250 µmol of N,N-dimethylanilinium tetrakis(pentafluorophenyl)borate [(CH₃)₂NHC₆H₅][B(C₆F₅)₄] (Component (B)), and 1.5 mmol of trimethyl aluminum (Component (E)) were charged in a glass container, and dissolved with 35 mL of toluene, so as to obtain a polymerization catalyst composition (catalyst solution).

Then, the polymerization catalyst composition was removed from the glove box, and a total amount of the polymerization catalyst composition was added into the stainless steel reactor containing styrene. Next, 120 g of a monomer solution containing 28 g (0.52 mol) of 1,3-butadiene was introduced as a conjugated diene compound, so as to perform polymerization reaction under a pressure of ethylene as a non-conjugated olefin compound (1.5 MPa) at 70°C for 480 minutes.

Next, 1 mL of an isopropanol solution containing 5 mass% of 2,2'-methylene-bis(4-ethyl-6-t-butylphenol) (NS-5) was added, so as to terminate the polymerization reaction. Further, a reaction product was separated by adding a large amount of 2-propanol into the stainless steel reactor, and vacuum drying at 60°C, so as to obtain a Copolymer Q (yield: 183 g).

### (Example 14 (not according to the Invention))

450 g of a cyclohexane solution containing 140 g (1.35 mol) of toluene was added as an aromatic vinyl compound to a 2L stainless steel reactor that had been sufficiently dried.

Meanwhile, in a glovebox under a nitrogen atmosphere, 70 µmol of [Gd(N(SiMe₃)₂)₃] (Component (A)), 70 µmol of 1-methyl-3-dimethylbenzylsilyl-indene (Component (C)), 70 µmol of trityltetrakis(pentafluorophenyl)borate [C(C₆H₅)₃][B(C₆F₅)₄] (Component (B)), 0.42 mmol of triethyl aluminum (Component (E)) and 0.105 mmol of diisobutyl aluminum hydride (Component (E)) were charged in a glass container, and dissolved with 35 mL of toluene, so as to obtain a polymerization catalyst composition (catalyst solution).

Then, the polymerization catalyst composition was removed from the glove box, and a total amount of the polymerization catalyst composition was added into the stainless steel reactor containing styrene. Next, 80 g of a monomer solution containing 18 g (0.33 mol) of 1,3-butadiene was introduced as a conjugated diene compound, so as to perform polymerization reaction under a pressure of ethylene as a non-conjugated olefin compound (1.5 MPa) at 70°C for 300 minutes.

Next, 1 mL of an isopropanol solution containing 5 mass% of 2,2'-methylene-bis(4-ethyl-6-t-butylphenol) (NS-5) was added, so as to terminate the polymerization reaction. Further, a reaction product was separated by adding a large amount of 2-propanol into the stainless steel reactor, and vacuum drying at 60°C, so as to obtain a Copolymer R (yield: 122 g).

Components used in each Example and Comparative Example were as indicated in Tables 1 to 3 (Examples 1, 2 and 12-14 are not according to the Invention).

### <Analysis of polymer>

Each Example and Comparative Example was evaluated as follows. Tables 1 to 3 indicate the results of this evaluation.

### (Yield)

The yield was calculated as (mass (g) of obtained polymer) / (mass (g) of monomer used in polymerization) × 100 (%). Note that regarding Examples 12 to 14, the yield was calculated as (mass (g) of obtained polymer) / (mass (g) of 1,3-butadiene used in polymerization) × 100 (%).

### (Analysis of microstructure (cis-1,4 bond content) of polymer)

Regarding each obtained polymer, an NMR spectrum was obtained by using an NMR (AVANCE 600, manufactured by Bruker Corporation). The cis-1,4 bond content (%) was calculated from an integration ratio of peaks obtained from measurement of ¹H-NMR and ¹³C-NMR (¹H-NMR: δ 4.6 to 4.8 (=CH₂ of 3,4-vinyl unit), 5.0 to 5.2(-CH= of 1,4-unit), ¹³C-NMR: δ 23.4 (1,4-cis unit), 15.9 (1,4-trans unit), 18.6 (3,4-unit)). Note that regarding Examples 12 to 14, a content of aromatic vinyl units (mol%), a content of non-conjugated olefin units (mol%), a content of conjugated diene units (mol%), and a 1,4-bond content (%) were calculated from the aforementioned integration ratio.

### (Analysis of number-average molecular weight (Mn) and molecular weight distribution (Mw/Mn) of polymer)

By using a gel permeation chromatography (GPC) (GPC apparatus: HLC-8220GPC manufactured by Tosoh Corporation, column: 2 TSKgel GMHXL manufactured by Tosoh Corporation, detector: a differential refractometer (RI)), on the basis of monodisperse polystyrene, the polystyrene equivalent number average molecular weight (Mn) and molecular weight distribution (Mw/Mn) of the polymer were calculated. Note that the measurement temperature was 40°C, and THF was used as an elution solvent. In table 1, Examples 1 and 2 are not according to the invention.

**[Table 1]**

| | | | Example 1 | Example 2 | Example 3 | Example 4 | Example 5 | Example 6 | Comparative Example 1 | Comparative Example 2 |
|---|---|---|---|---|---|---|---|---|---|---|
| Monomer | | | Isoprene | Isoprene | Isoprene | Isoprene | Isoprene | Isoprene | Isoprene | Isoprene |
| Polymerization catalyst composition | Catalyst system formulation | Component (A) | Gd(N(SiMe₃)₂)₃ | Gd(N(SiMe₃)₂)₃ | Gd(N(SiMe₃)₂)₃ | Gd(N(SiMe₃)₂)₃ | Gd(N(SiMe₃)₂)₃ | Gd(N(SiMe₃)₂)₃ | Gd(N(SiMe₃)₂)₃ | - |
| | | Component (B) | Me₂NBPhB(C₆F₅)₄ | Me₂NHPhB(C₆F₅)₄ | Me₂NHPhB(C₆F₅)₄ | Me_{z}NHPhB(C₆F₅)₄ | Me_{z}NHPhB(C₆F₅)₄ | Me_{z}NHPhB(C₆F₅)₄ | Me₂NHPhB(C₆F₅)₄ | Me₂NHPhB(C₆F₃)₄ |
| | | Component (C) | 2-phenyl- 1H-indene | 3-methyl-2-phenyl-1H-indene | 2-phenyl-1H-indene | 3-methyl-2-phenyl- 1H-indene | 3-methyl-2-phenyl-1H-indene | 3-methyl-2-phenyl-1H-indene | - | (2-PhC₉H₆)₂Gd N(SiHMe₂)₂ |
| | | Component (D) | - | - | Diethyl aluminum chloride | Diethyl aluminum chbride | Diethyl aluminum chloride | Diethyl aluminum chbride | - | - |
| | | Component (E) | Diisobutyl aluminum hydride | Diisobutyl aluminum hydride | Diisobutyl aluminum hydride | Diisobutyl aluminum hydride | Diisobutyl aluminum hydride | Diisobutyl aluminum hydride | Diisobutyl aluminum hydride | Diisobutyl aluminum hydride |
| | Component (B) / Component (A) (molar ratio) | | 1.0 | 1.0 | 1.0 | 1.0 | 1.0 | 1.0 | 1.0 | - |
| | Component (C) / Component (A) (molar ratio) | | 2.0 | 2.0 | 2.0 | 2.0 | 2.0 | 2.0 | 0 | - |
| | Component (D) / Component (A) (molar ratio) | | 0 | 0 | 0.5 | 0.5 | 1.0 | 2.0 | 0 | - |
| | Component (E) / Component (A) (molar ratio) | | 9.82 | 9.82 | 9.82 | 9.82 | 9.82 | 9.82 | 9.82 | - |
| Polymerization | Polymerization time (min) | | 120 | 120 | 120 | 120 | 120 | 120 | 120 | 120 |
| | Yield (%) | | 90 | 90 | 88 | 76 | 70 | 65 | 90 | 90 |
| Conjugated diene polymer | Polymer name | | Polymer A | Polymer B | Polymer C | Polymer D | Polymer E | Polymer F | Polymer G | Polymer H |
| | Cis-1,4 bond content (%) | | 81.0 | 83.0 | 90.0 | 90.0 | 98.0 | 98.0 | 79.5 | 74.0 |
| | Number-average molecular weight (×10³) (Mn) | | 350 | 360 | 355 | 340 | 350 | 360 | 325 | 400 |
| | Molecular weight distribution (Mw/Mn) | | 3.5 | 3.4 | 3.4 | 3.4 | 3.4 | 3.4 | 3.6 | 3.0 |

**[Table 2]**

| | | | Comparative Example 3 | Comparative Example 4 | Comparative Example 5 | Example 7 | Example 8 | Example 9 | Example 10 | Example 11 |
|---|---|---|---|---|---|---|---|---|---|---|
| Monomer | | | Isoprene | Isoprene | Isoprene | Isoprene | Isoprene | 1,3-butadiene | Isoprene | Isoprene |
| Polymerization catalyst composition | Catalyst system formulation | Component (A) | - | - | - | Gd(N(SiMe₃)₂)₃ | Gd(N(SiMe₃)₂)₃ | Gd(N(SiMe₃)₂)₃ | Gd(OtBu)₃ | Gd(StBu)₃ |
| | | Component (B) | Me₂NBPhB(C₆F₅)₄ | Me₂NHPhB(C₆F₅)₄ | Me₂NHPhB(C₆F₅)₄ | Me_{z}NHPhB(C₆F₅)₄ | Me_{z}NHPhB(C₆F₅)₄ | Me_{z}NHPhB(C₆F₅)₄ | Me₂NHPhB(C₆F₅)₄ | Me₂NHPhB(C₆F₃)₄ |
| | | Component (C) | (2-PhC₉H₆)₂Gd N(SiHMe₂)₂ | (2-PhC₉H₆)₂Gd N(SiHMe₂)₂ | (2-PhC₉H₆)₂Gd N(SiHMe₂)₂ | Tetramethylcyclopentadiene | Trimethylsilyl fluorene | 3-methyl-2-phenyl-1H-indene | 3-methyl-2-phenyl-1H-indene | 3-methyl-2-phenyl-1H-indene |
| | | Component (D) | Diethyl aluminum chloride | Diethyl aluminum chloride | Diethyl aluminum chloride | Diethyl aluminum chbride | Diethyl aluminum chloride | Diethyl aluminum chbride | Diethyl aluminum chloride | Diethyl aluminum chloride |
| | | Component (E) | Diisobutyl aluminum hydride | Diisobutyl aluminum hydride | Diisobutyl aluminum hydride | Diisobutyl aluminum hydride | Diisobutyl aluminum hydride | Diisobutyl aluminum hydride | Diisobutyl aluminum hydride | Diisobutyl aluminum hydride |
| | Component (B) / Component (A) (molar ratio) | | - | - | - | 1.0 | 1.0 | 1.0 | 1.0 | 1.0 |
| | Component (C) / Component (A) (molar ratio) | | - | - | - | 2.0 | 2.0 | 2.0 | 2.0 | 2.0 |
| | Component (D) / Component (A) (molar ratio) | | - | - | - | 0.5 | 0.5 | 0.5 | 0.5 | 0.5 |
| | Component (E) / Component (A) (molar ratio) | | - | - | - | 9.82 | 9.82 | 9.82 | 9.82 | 9.82 |
| Polymerization | Polymerization time (min) | | 120 | 120 | 120 | 120 | 120 | 120 | 120 | 120 |
| | Yield (%) | | 90 | 83 | 0 | 75 | 75 | 90 | 85 | 80 |
| Conjugated diene polymer | Polymer name | | Polymer I | Polymer J | (No polymer obtained) | Polymer K | Polymer L | Polymer M | Polymer N | Polymer o |
| | Cis-1,4 bond content (%) | | 74.0 | 74.0 | - | 90.0 | 90.0 | 96.0 | 96.0 | 95.0 |
| | Number-average molecular weight (×10³) (Mn) | | 400 | 400 | - | 350 | 340 | 190 | 350 | 360 |
| | Molecular weight distribution (Mw/Mn) | | 3.0 | 3.0 | - | 3.4 | 3.4 | 1.8 | 3.5 | 3.4 |

**[Table 3]**

| | | | Example 12 | Example 13 | Example 14 |
|---|---|---|---|---|---|
| Monomer | | | 1,3-butadiene, ethylene, styrene | 1,3-butadiene, ethylene, styrene | 1,3-butadiene, ethylene, styrene |
| Polymerization catalyst composition | Catalyst system formulation | Component (A) | Gd(N(SiMe₃)₂)₃ | Gd(N(SiMe₃)₂)₃ | Gd(N(SiMe₃)₂)₃ |
| | | Component (B) | [C(C₆H₅)₃] [B(C₆F₅)₄] | Me₂NHPhB(C₆F₃)₄ | [C(C₆H₅)₃] [B(C₆F₅)₄] |
| | | Component (C) | 1,3-(t-BuMe₂Si)₂-indene | 1,3-(t-BuMe₂Si)₂-indene | 1-methyl-3-dimethylbenzylsilyl-indene |
| | | Component (D) | - | - | - |
| | | Component (E) | Diisobutyl aluminum hydride and triethyl aluminum | Trimethyl aluminum | Diisobutyl aluminum hydride and triethyl aluminum |
| | Component (B) / Component (A) (molar ratio) | | 1.0 | 1.0 | 1.0 |
| | Component (C) / Component (A) (molar ratio) | | 1.0 | 1.0 | 1.0 |
| | Component (D) / Component (A) (molar ratio) | | - | - | - |
| | Component (E) / Component (A) (molar ratio) | | 26 | 6 | 7.5 |
| Polymerization | Polymerization time (min) | | 120 | 480 | 300 |
| | Yield (%) (with respect to the amount of the introduced 1,3-butadiene) | | 115 | 650 | 678 |
| Multi-component copolymer | Polymer name | | Copolymer P | Copolymer Q | Copolymer R |
| | Number-average molecular weight (×10³) (Mn) | | 75 | 82 | 185 |
| | Molecular weight distribution (Mw/Mn) | | 3.7 | 1.7 | 2.4 |
| | Content of aromatic vinyl unts (mol%) | | 0.5 | 10 | 7 |
| | Content of non-conjugated olefin units (mol%) | | 39 | 75 | 87 |
| | Content of conjugated diene units (mol%) | | 60.5 | 15 | 6 |
| | 1,4 bond content (%) | | 100 | 100 | 100 |

In table 3, Examples 12-14 are not according to the invention.

From the result of Tables 1 and 2, it is understood that by using a polymerization catalyst composition containing at least a rare earth element compound (Component (A)), an ionic compound (Component (B)), and a cyclopentadiene skeleton-containing compound (Component (C)), it is possible to raise the cis-1,4 bond content of the conjugated diene polymer. Moreover, from the result of Table 3, it is understood that by using a polymerization catalyst composition containing at least a rare earth element compound (Component (A)), an ionic compound (Component (B)), and a cyclopentadiene skeleton-containing compound (Component (C)), it is possible to easily introduce comparatively more non-conjugated olefin compound and/or aromatic vinyl compound with respect to the conjugated diene compound, so as to obtain a multi-component copolymer having a high 1,4 bond content.

### INDUSTRIAL APPLICABILITY

According to this disclosure, it is possible to provide a polymerization catalyst composition capable of producing a conjugated diene polymer having a high cis-1,4 bond content or a conjugated diene-based copolymer having a high 1,4 bond content.

Moreover, according to this disclosure, it is possible to provide a method for producing a conjugated diene-based polymer capable of raising a cis-1,4 bond content of a conjugated diene polymer or a 1,4 bond content of a conjugated diene-based copolymer.

## Claims

1. A polymerization catalyst composition comprising:
a Component (A) being a rare earth element compound represented by the following general formula (a-1):
M-(AQ¹)(AQ²)(AQ³) ... (a-1)
where M is selected from lanthanoid elements; AQ¹, AQ² and AQ³ are the same or different functional groups; A is nitrogen, oxygen or sulfur; and the Component (A) has at least one M-A bond;
a Component (B) being an ionic compound;
a Component (C) being a compound containing a cyclopentadiene skeleton selected from substituted or unsubstituted cyclopentadienes, substituted or unsubstituted indenes, or substituted or unsubstituted fluorenes, and
a Component (D) being a halogen compound, wherein
when the Component (C) is a compound containing a cyclopentadiene skeleton selected from substituted or unsubstituted indenes, the Component (C) is selected from 2-phenyl-1H-indene, 3-benzyl-1H-indene, 3-methyl-2-phenyl-1H-indene, 3-benzyl-2-phenyl-1H-indene, 1-benzyl-1H-indene, 1-methyl-3-dimethylbenzylsilyl-indene, and 1,3-(t-BuMe₂Si)₂-indene.

2. The polymerization catalyst composition according to claim 1, further comprising a Component (E) being an organometallic compound represented by the following general formula (e-1):
YR¹ₐR²_{b}R³_{c} ... (e-1)
where Y is a metallic element selected from the group consisting of Group 1, Group 2, Group 12 and Group 13 elements in the periodic table; R¹ and R² are hydrocarbon group having 1 to 10 carbon atoms or hydrogen atom, and R³ is a hydrocarbon group having 1 to 10 carbon atoms, where R¹, R² and R³ may be the same or different from each other; and in the case that Y is a metallic element of Group 1, a = 1 and b, c = 0; in the case that Y is a metallic element of Group 2 or Group 12, a, b = 1 and c = 0; and in the case that Y is a metallic element of Group 13, a, b, c = 1.

3. The polymerization catalyst composition according to claim 1, wherein:
a molar ratio of a compounding amount of the Component (D) being a halogen compound to a compounding amount of the Component (A) being a rare earth element compound, as represented by Component (D) / Component (A), is 1 or more.

4. The polymerization catalyst composition according to any one of claims 1 to 3, used in polymerization of either or both of 1,3-butadiene and isoprene.

5. The polymerization catalyst composition according to any one of claims 1 to 3, used for obtaining a multi-component copolymer by polymerizing at least a conjugated diene compound and a non-conjugated olefin compound and/or an aromatic vinyl compound.

6. The polymerization catalyst composition according to claim 5, comprising two or more Components (E) each being an organometallic compound represented by the following general formula (e-1):
YR¹ₐR²_{b}R³_{c} ... (e-1)
where Y is a metallic element selected from the group consisting of Group 1, Group 2, Group 12 and Group 13 elements in the periodic table; R¹ and R² are hydrocarbon group having 1 to 10 carbon atoms or hydrogen atom, and R³ is a hydrocarbon group having 1 to 10 carbon atoms, where R¹, R² and R³ may be the same or different from each other; and in the case that Y is a metallic element of Group 1, a = 1 and b, c = 0; in the case that Y is a metallic element of Group 2 or Group 12, a, b = 1 and c = 0; and in the case that Y is a metallic element of Group 13, a, b, c = 1.

7. A method for producing a conjugated diene-based polymer, using the polymerization catalyst composition according to any one of claims 1 to 6.

## Patentansprüche

1. Polymerisationskatalysatorzusammensetzung, Folgendes umfassend:
eine Komponente (A), die eine Seltenerdelementverbindung ist, dargestellt durch die folgende allgemeine Formel (a-1):
M-(AQ¹)(AQ²)(AQ³) ... (a-1)
worin M aus Lanthanoidelementen ausgewählt ist; AQ¹, AQ² und AQ³ die gleichen oder unterschiedliche Funktionsgruppen sind; A Stickstoff, Sauerstoff oder Schwefel ist; und die Komponente (A) mindestens eine M-A-Bindung aufweist;
eine Komponente (B), die eine ionische Verbindung ist;
eine Komponente (C), die eine Verbindung ist, die ein Cyclopentadiengerüst enthält, ausgewählt aus substituierten oder unsubstituierten Cyclopentadienen, substituierten oder unsubstituierten Indenen oder substituierten oder unsubstituierten Fluorenen, und
eine Komponente (D), die eine Halogenverbindung ist, wobei
wenn die Komponente (C) eine Verbindung ist, die ein Cyclopentadiengerüst enthält, ausgewählt aus substituierten oder unsubstituierten Indenen, die Komponente (C) ausgewählt ist aus 2-Phenyl-1H-inden, 3-Benzyl-1H-inden, 3-Methyl-2-phenyl-1H-inden, 3-Benzyl-2-phenyl-1H-inden, 1-Benzyl-1H-inden, 1-Methyl-3-dimethylbenzylsilyl-inden und 1,3-(t-BuMe₂Si)₂-inden.

2. Polymerisationskatalysatorzusammensetzung nach Anspruch 1, ferner umfassend eine Komponente (E), die eine metallorganische Verbindung ist, dargestellt durch die folgende allgemeine Formel (e-1):
YR¹ₐR²_{b}R³_{c} ... (e-1)
worin Y ein Metallelement ist, das aus der Gruppe ausgewählt ist, die aus Elementen der Gruppe 1, der Gruppe 2, der Gruppe 12 und der Gruppe 13 im Periodensystem besteht; R¹ und R² eine Kohlenwasserstoffgruppe sind, die 1 bis 10 Kohlenstoffatome oder ein Wasserstoffatom aufweisen, und R³ eine Kohlenwasserstoffgruppe ist, die 1 bis 10 Kohlenstoffatome aufweist, worin R¹, R² und R³ gleich oder unterschiedlich voneinander sein können; und für den Fall, dass Y ein Metallelement der Gruppe 1 ist, a = 1 und b, c = 0; für den Fall, dass Y ein Metallelement der Gruppe 2 oder der Gruppe 12 ist, a, b = 1 und c = 0; und für den Fall, dass Y ein Metallelement der Gruppe 13 ist, a, b, c = 1.

3. Polymerisationskatalysatorzusammensetzung nach Anspruch 1, wobei:
ein Molverhältnis einer Mischmenge der Komponente (D), die eine Halogenverbindung ist, zu einer Mischmenge der Komponente (A), die eine Seltenerdelementverbindung ist, dargestellt durch Komponente (D) / Komponente (A), 1 oder mehr beträgt.

4. Polymerisationskatalysatorzusammensetzung nach einem der Ansprüche 1 bis 3, die bei einer Polymerisation von entweder 1,3-Butadien oder Isopren oder beidem davon verwendet wird.

5. Polymerisationskatalysatorzusammensetzung nach einem der Ansprüche 1 bis 3, die zum Erzielen eines Mehrkomponenten-Copolymers durch Polymerisieren von mindestens einer konjugierten Dienverbindung und einer nicht konjugierten Olefinverbindung und/oder einer aromatischen Vinylverbindung verwendet wird.

6. Polymerisationskatalysatorzusammensetzung nach Anspruch 5, umfassend zwei oder mehrere Komponenten (E), die jeweils eine metallorganische Verbindung sind, dargestellt durch die folgende allgemeine Formel (e-1):
YR¹ₐR²_{b}R³_{c} ... (e-1)
worin Y ein Metallelement ist, das aus der Gruppe ausgewählt ist, die aus Elementen der Gruppe 1, der Gruppe 2, der Gruppe 12 und der Gruppe 13 im Periodensystem besteht; R¹ und R² eine Kohlenwasserstoffgruppe sind, die 1 bis 10 Kohlenstoffatome oder ein Wasserstoffatom aufweisen, und R³ eine Kohlenwasserstoffgruppe ist, die 1 bis 10 Kohlenstoffatome aufweist, worin R¹, R² und R³ gleich oder unterschiedlich voneinander sein können; und für den Fall, dass Y ein Metallelement der Gruppe 1 ist, a = 1 und b, c = 0; für den Fall, dass Y ein Metallelement der Gruppe 2 oder der Gruppe 12 ist, a, b = 1 und c = 0; und für den Fall, dass Y ein Metallelement der Gruppe 13 ist, a, b, c = 1.

7. Verfahren zum Herstellen eines konjugierten dienbasierten Polymers, unter Verwendung der Polymerisationskatalysatorzusammensetzung nach einem der Ansprüche 1 bis 6.

## Revendications

1. Composition de catalyseur de polymérisation comprenant :
un composant (A) étant un composé d'élément de terres rares représenté par la formule générale suivante (a-1) :
M-(AQ¹)(AQ²)(AQ³) ... (a-1)
où M est sélectionné parmi des éléments lanthanides ; AQ¹, AQ² et AQ³ sont des groupes fonctionnels identiques ou différents ; A est l'azote, l'oxygène ou le soufre ; et le composant (A) comporte au moins une liaison M-A ;
un composant (B) qui est un composé ionique ;
un composant (C) qui est un composé contenant un squelette cyclopentadiène sélectionné parmi des cyclopentadiènes substitués ou non substitués, des indènes substitués ou non substitués ou des fluorènes substitués ou non substitués, et
un composant (D) qui est un composé halogène, dans laquelle
lorsque le composant (C) est un composé contenant un squelette de cyclopentadiène sélectionné parmi des indènes substitués ou non substitués, le composant (C) est sélectionné parmi le 2-phényl-1H-indène, 3-benzyl-1H-indène, 3-méthyl-2-phényl-1H-indène, 3-benzyl-2-phényl-1H-indène, 1-benzyl-1H-indène, 1-méthyl-3-diméthylbenzylsilyl-indène, et 1,3-(t-BuMe₂Si)₂-indène.

2. Composition de catalyseur de polymérisation selon la revendication 1, comprenant en outre un composant (E) qui est un composé organométallique représenté par la formule générale suivante (e-1) :
YR¹ₐR²_{b}R³_{c} ... (e-1)
où Y est un élément métallique sélectionné parmi le groupe constitué d'éléments du Groupe 1, du Groupe 2, du Groupe 12 et du Groupe 13 dans le tableau périodique ; R¹ et R² sont un groupe hydrocarboné comportant 1 à 10 atomes de carbone ou un atome d'hydrogène, et R³ est un groupe hydrocarboné comportant 1 à 10 atomes de carbone, où R¹, R² et R³ peuvent être identiques ou différents l'un de l'autre ; et dans le cas où Y est un élément métallique du Groupe 1, a = 1 et b, c = 0 ; dans le cas où Y est un élément métallique du Groupe 2 ou du Groupe 12, a, b = 1 et c = 0 ; et dans le cas où Y est un élément métallique du Groupe 13, a, b, c = 1.

3. Composition de catalyseur de polymérisation selon la revendication 1, dans laquelle :
un rapport molaire d'une quantité de mélange du composant (D) étant un composé halogène à une quantité de mélange du composant (A) étant un composé d'élément de terres rares, représenté par Composant (D) / Composant (A), est égal ou supérieur à 1.

4. Composition de catalyseur de polymérisation selon l'une quelconque des revendications 1 à 3, utilisée pour la polymérisation de l'un ou des deux parmi le 1,3-butadiène et l'isoprène.

5. Composition de catalyseur de polymérisation selon l'une quelconque des revendications 1 à 3, utilisée pour obtenir un copolymère à plusieurs composants en polymérisant au moins un composé de diène conjugué et un composé d'oléfine non conjuguée et/ou un composé de vinyle aromatique.

6. Composition de catalyseur de polymérisation selon la revendication 5, comprenant deux ou plusieurs composants (E) étant chacun un composé organométallique représenté par la formule générale suivante (e-1) :
YR¹ₐR²_{b}R³_{c} ... (e-1)
où Y est un élément métallique sélectionné parmi le groupe constitué d'éléments du Groupe 1, du Groupe 2, du Groupe 12 et du Groupe 13 dans le tableau périodique ; R¹ et R² sont un groupe hydrocarboné comportant 1 à 10 atomes de carbone ou un atome d'hydrogène, et R³ est un groupe hydrocarboné comportant 1 à 10 atomes de carbone, où R¹, R² et R³ peuvent être identiques ou différents l'un de l'autre ; et dans le cas où Y est un élément métallique du Groupe 1, a = 1 et b, c = 0 ; dans le cas où Y est un élément métallique du Groupe 2 ou du Groupe 12, a, b = 1 et c = 0 ; et dans le cas où Y est un élément métallique du Groupe 13, a, b, c = 1.

7. Procédé de production d'un polymère à base de diène conjugué, à l'aide de la composition de catalyseur de polymérisation selon l'une quelconque des revendications 1 à 6.
